# EUROPEAN PATENT APPLICATION

(11) **EP 3 372 978 A1**
(43) Date of publication of application: **12.09.2018**
(21) Application number: 18159280.9
(22) Date of filing: 28.02.2018
(51) Int. Cl.: G01M 17/007, G09B 23/32

(54) **ARTICULATING DUMMY POSITIONING SYSTEM FOR CRASH TEST DUMMY**

(30) Priority: 07.03.2017 US 201762468054 P; 21.12.2017 US 201715850141
(71) Applicant: Humanetics Innovative Solutions, Inc., Plymouth, MI 48170 (US)
(72) Inventor: Davis, James, Commerce Township, MI Michigan 48152 (US)
(74) Representative: Potter Clarkson LLP

(57) **Abstract**

An articulating dummy positioning system for a crash test dummy includes a test fixture configured to support a crash test dummy therein, at least one articulating arm assembly coupled to the test fixture, and at least one of at least one dummy positioning camera, computer monitor, and computer operatively coupled to the at least one articulating arm assembly to allow the at least one of at least one dummy positioning camera, computer monitor, and computer to move in and out of the test fixture relative to the crash test dummy to allow a crash test and analysis to be performed on the crash test dummy.

## Description

### CROSS-REFERENCE TO RELATED APPLICATION(S)

The present application claims the benefit of U.S. Provisional Patent Application Serial No. 62/468,054, filed March 7, 2017, the entire disclosure of which is hereby expressly incorporated by reference.

### BACKGROUND OF THE INVENTION

### 1. Field of the Invention

The present invention relates generally to crash test dummies and, more particularly, to an articulating dummy positioning system for a crash test dummy.

### 2. Description of the Related Art

Automotive, aviation, and other vehicle manufacturers conduct a wide variety of collision testing to measure the effects of a collision on a vehicle and its occupants. Through collision testing, a vehicle manufacturer gains valuable information that can be used to improve the vehicle, authorities examine vehicles to summit type approval, and consumer organizations provide information on vehicle safety ratings to the public.

Collision testing often involves the use of anthropomorphic test devices, better known as "crash test dummies", to estimate a human's injury risk. The dummy must possess the general mechanical properties, dimensions, masses, joints, and joint stiffness of the humans of interest. In addition, they must possess sufficient mechanical impact response similitude and sensitivity to cause them to interact with the vehicle's interior in a human-like manner.

The crash test dummy typically includes a head assembly, spine assembly (including neck), rib cage assembly, abdomen assembly, pelvis assembly, right and left arm assemblies, and right and left leg assemblies. Generally, the arm assembly has an upper arm assembly and a lower arm assembly. The upper arm assembly is typically connected to a shoulder assembly, which, in turn, is typically connected to the spine assembly.

Technology has improved so that the anthropomorphic test device (ATD), or crash test dummy, positioning can be quantified by utilizing high-resolution cameras. However, there is no device that integrates a dummy positioning system (DPS) with test equipment for the ATD.

One of the disadvantages with current test equipment is that there are variations in the performance of the ATD in between test runs correlated to ATD location. The DPS can eliminate this variation if used in conjunction with the test equipment. The current DPS technology uses a tripod or similar mount to hold the cameras and a computer to analyze the data. However, the tripod is unwieldy and gets in the way more than it helps. Thus, there is a need in the art to merge the ATD test equipment and DPS into one system.

### SUMMARY OF THE INVENTION

Accordingly, the present invention provides an articulating dummy positioning system for a crash test dummy. The articulating dummy positioning system includes a test fixture configured to support a crash test dummy therein and at least one articulating arm assembly coupled to the test fixture. The articulating dummy positioning system also includes at least one of at least one dummy positioning camera, computer monitor, and computer operatively coupled to the at least one articulating arm assembly to allow the at least one of at least one dummy positioning camera, computer monitor, and computer to move in and out of the test fixture relative to the crash test dummy to allow a crash test and analysis to be performed on the crash test dummy.

The present invention also provides an articulating dummy positioning system for a crash test dummy including a test fixture including a plurality of column members and an impact table disposed in the test fixture to support a crash test dummy. The articulating dummy positioning system also includes at least one articulating arm assembly coupled to one of the column members and at least one of at least one dummy positioning camera, computer monitor, and computer operatively coupled to the at least one articulating arm assembly to allow the at least one of at least one dummy positioning camera, computer monitor, and computer to move in and out of the test fixture relative to the crash test dummy to allow a crash test and analysis to be performed on the crash test dummy.

The present invention further provides an articulating dummy positioning system for a crash test dummy comprising:
a test fixture including a plurality of column members;
an impact table disposed in said test fixture to support a crash test dummy;
at least one articulating arm assembly comprising a swivel arm and a clamp assembly to fixedly secure said swivel arm to one of said column members, said swivel arm including a plurality of support bars, at least one rotation pin disposed between said support bars to allow said support bars to rotate relative to each other, and a bracket attached to one of said computer monitor and said computer and a rotation pin interconnecting said bracket and one of said support bars; and
at least one of at least one dummy positioning camera, computer monitor, and computer operatively coupled to said at least one articulating arm assembly to allow said at least one of at least one dummy positioning camera, computer monitor, and computer to move in and out of said test fixture relative to the crash test dummy to allow a full crash test and analysis to be performed on the crash test dummy.

One advantage of the present invention is that a new articulating dummy positioning system is provided for a crash test dummy. Another advantage of the present invention is that the articulating dummy positioning system merges ATD test equipment and DPS into one system. An additional advantage of the present invention is that the articulating dummy positioning system mounts the DPS directly to a test fixture. Yet another advantage of the present invention is that the articulating dummy positioning system includes articulating arms that can be used to move DPS cameras into position and out of the way for the crash test. Still another advantage of the present invention is that the articulating dummy positioning system includes a computer that can also be mounted to the test fixture and can be used not only for the DPS, but also for data acquisition and analysis. A further advantage of the present invention is that the articulating dummy positioning system consolidates all the parts of the test equipment into one device that increases efficiency and accuracy of testing the ATD.

Other features and advantages of the present invention will be readily appreciated, as the same becomes better understood, after reading the subsequent description taken in conjunction with the accompanying drawings.

### BRIEF DESCRIPTION OF THE DRAWINGS

FIG. 1 is a perspective view of one embodiment of an articulating dummy positioning system, according to the present invention, for a crash test dummy with articulating arm assemblies removed.
FIG. 2 is another perspective view of the articulating dummy positioning system of FIG. 1.
FIG. 3 is a front elevational view of the articulating dummy positioning system assembly of FIGS. 1 and 2.
FIG. 4 is a side elevational view of the articulating dummy positioning system of FIGS. 1 and 2.
FIG. 5 is a perspective view of the articulating dummy positioning system of FIG. 1 with the articulating arm assemblies added and the crash test dummy removed.
FIG. 6 is an enlarged perspective view of a portion of the articulating dummy positioning system of FIG. 5.
FIG. 7 is an enlarged perspective view of a portion of the articulating dummy positioning system of FIG. 5.

### DESCRIPTION OF THE PREFERRED EMBODIMENT(S)

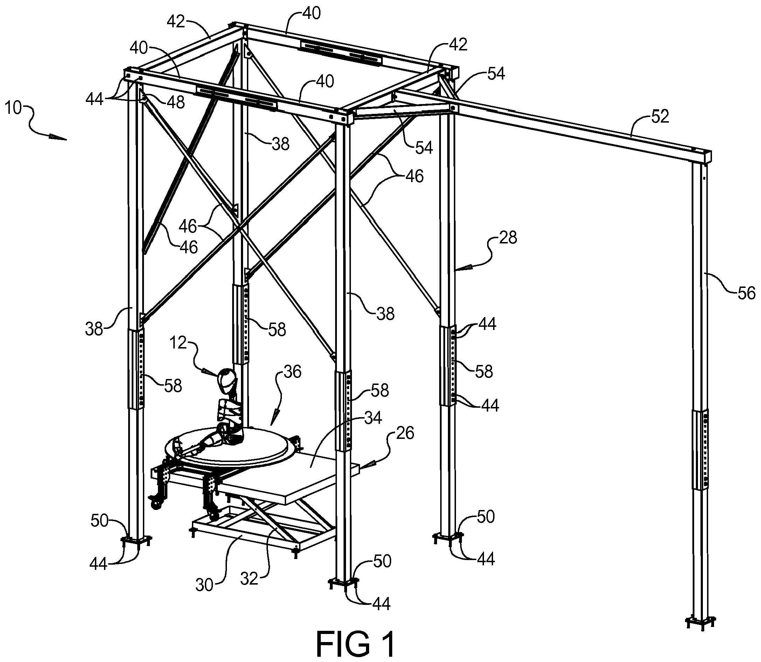

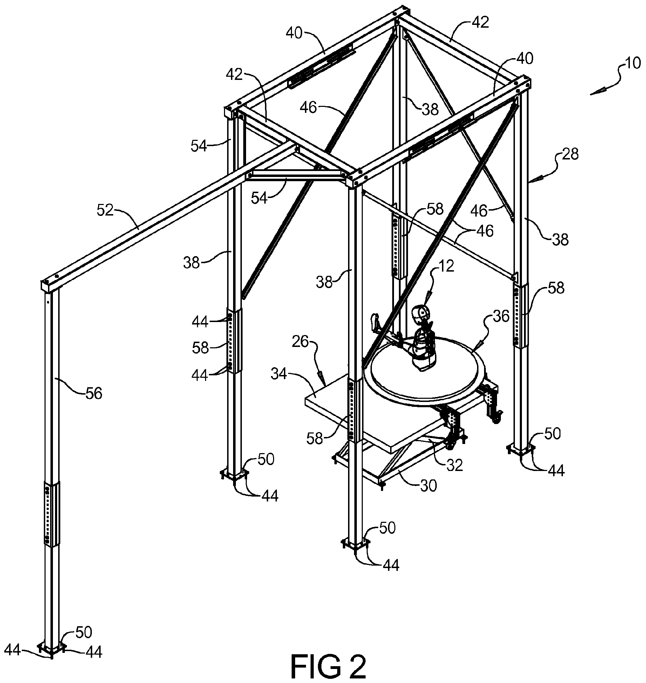

Referring to the drawings and in particular FIGS. 1 and 2, one embodiment of a articulating dummy positioning system, according to the present invention, is shown at 10 for a crash test dummy, generally indicated at 12. In the embodiment illustrated, the crash test dummy 12 is of a 10.5 year old child and is illustrated in a sitting position on a positioning table assembly 36. This crash test dummy 12 is used primarily to test the performance of automotive interiors and restraint systems for front and rear seat occupants. The size and weight of the crash test dummy 12 are based on anthropometric studies, which are typically done separately by the following organizations, University of Michigan Transportation Research Institute (UMTRI), U.S. Military Anthropometry Survey (ANSUR), and Civilian American and European Surface Anthropometry Resource (CESAR). It should be appreciated that ranges of motions, centers of gravity, and segment masses simulate those of human subjects defined by the anthropometric data.

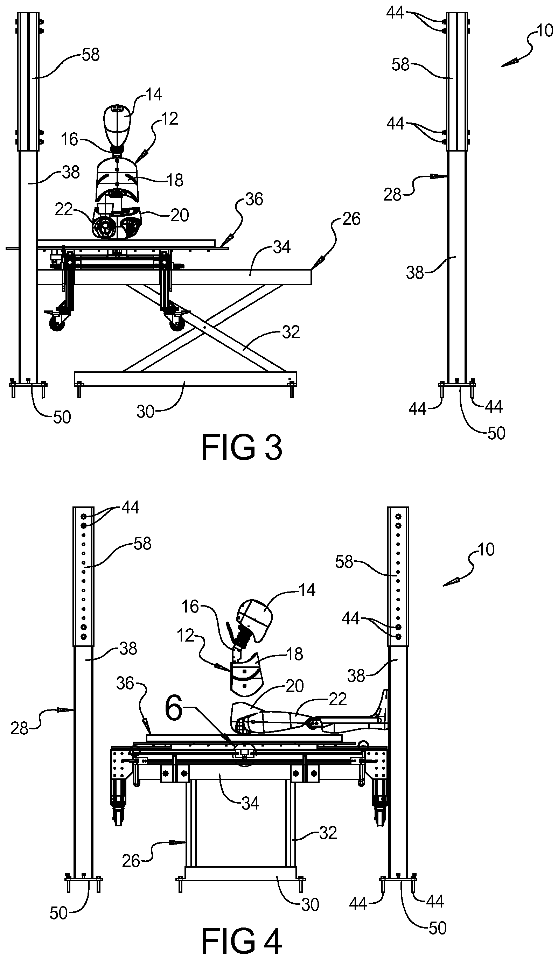

As illustrated in FIGS. 3 and 4, the crash test dummy 12 generally includes a head assembly 14, a spine assembly 16 having an upper end mounted to the head assembly 14 and a lower end extending into a torso area of the crash test dummy 12. The torso area of the crash test dummy 12 also includes a rib cage assembly 18 connected to the spine assembly 16 and a pair of arm assemblies (not shown) for a right arm assembly and a left arm assembly. The crash test dummy 12 includes a pelvis assembly 20 and a pair of leg assemblies (only one shown) connected to the pelvis assembly 20 for a right leg assembly 22 and a left leg assembly (not shown). It should be appreciated that various components of the crash test dummy 12 may be covered in a polyvinyl or urethane skin such as a flesh and skin assembly (not shown) for biofidelity of the crash test dummy 12.

Referring to FIGS. 1 through 5, the articulating dummy positioning system 10 includes an impact table, generally indicated at 26, disposed within a test fixture or impact stand, generally indicated at 28. The impact table 26 includes a frame 30 that is supported by a support surface such as a floor, a movable lift linkage 32 having a lower end connected to the frame 30, and a table 34 connected to an upper end of the lift linkage 32. The table 34 supports a positioning table assembly 36 during impact testing of the crash test dummy 12. The impact table 26 may be raised or lowered to raise or lower the positioning table assembly 36. An example of the positioning table assembly 36 is disclosed in pending U.S. Patent Application Serial No. 14/803,605, filed July 20, 2015, the entire disclosure of which is hereby expressly incorporated by reference. It should be appreciated that the lift linkage 32 allows the table 34 to be raised and lowered relative to the frame 30. It should also be appreciated that the impact table 26 is conventional and known in the art.

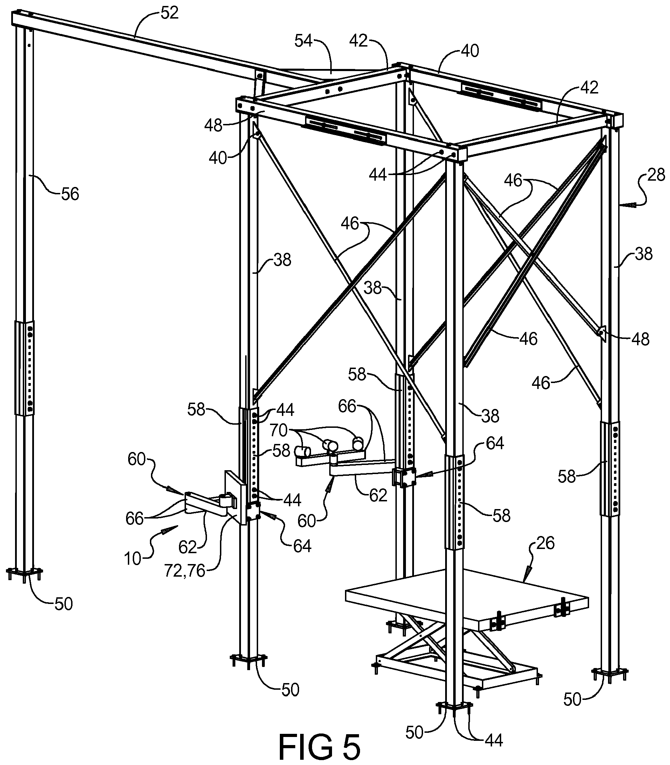

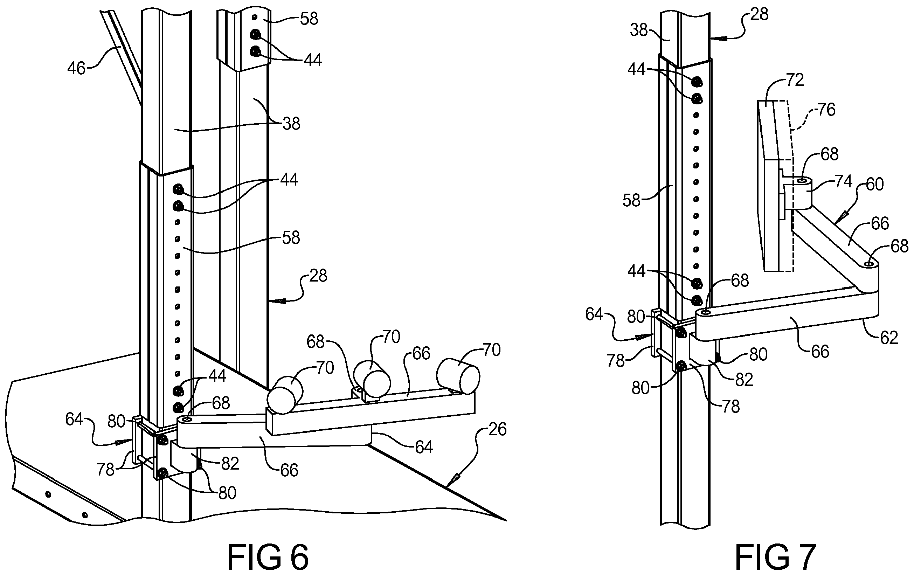

Referring to FIGS. 5 through 7, the impact stand 28 includes a plurality of posts or column members 38 ending vertically and spaced laterally and longitudinally. The impact stand 28 also includes a plurality of side members 40 extending longitudinally and spaced laterally between the column members 38 and a plurality of end members 42 extending laterally and spaced longitudinally between the columns 38. The end members 42 are disposed between the side members 40 and connected to each other by a suitable mechanism such as a plurality of fasteners 44. The impact stand 28 further includes a plurality of cross-members 46 extending diagonally between the column members 38 longitudinally and laterally and a plurality of inside brackets 48, which are, in turn, joined to the column members 38 and cross-members 46 by a suitable mechanism such as welding, fasteners 44, etc. The members 38, 40, 42, and 46 are made of a metal material such as aluminum.

The impact stand 28 may include a plurality of anchor plates 50 connected to the bottom of the column members 38 to secure the impact stand 28 to a support surface such as a floor. The anchor plates 50 are made of a metal material such as aluminum. The anchor plates 50 are joined to the column members 38 and the floor by a suitable mechanism such as welding, fasteners 44, etc. The impact stand 28 may include a stabilizer arm member 52 extending longitudinally and joined to one of the end members 42 by a suitable mechanism such as welding, fasteners 44, etc. The impact stand 28 may include a plurality of stabilizer cross-members 54 between the stabilizer arm 52 and the end member 42 and joined by a suitable mechanism such as welding, fasteners 44, etc. The impact stand 28 may include a stabilizer column member 56 extending between the stabilizer arm 52 and the support surface and joined by a suitable mechanism such as welding, fasteners 44, etc. The members 52, 54, and 56 are made of a metal material such as aluminum. It should be appreciated that the stabilizer column member 56 may include an anchor plate 50 at the bottom thereof and joined by a suitable mechanism such as welding, fasteners 44, etc.

The impact stand 28 may include one or more brackets 58 coupled to the column members 38. In one embodiment, the brackets 58 are rectangular and tubular sleeves that are disposed over each of the column members 38. The brackets 58 are made of a metal material such as aluminum. The brackets 58 are joined to the column members 38 by a suitable mechanism such as welding, fasteners 44, etc.

The articulating dummy positioning system 10 includes one or more articulating arm assembly, according to the present invention and generally indicated at 60, coupled to the impact stand 28. In one embodiment, the articulating arm assembly 60 includes a swivel arm 62 and a clamp assembly, generally indicated at 64, to connect the swivel arm 62 to one of the column members 38. In one embodiment, the swivel arm 62 includes one or more support bars 66 and one or more rotation pins 68 to allow the support bars 66 to rotate relative to each other and the clamp assembly 64. The articulating arm assemblies 60 support ATD test equipment. In one embodiment, the ATD test equipment includes one or more DPS cameras 70 mounted to one or more of the support bars 66 of the articulating arm assembly 60. The DPS cameras 70 are of a high resolution type. In another embodiment, the ATD test equipment includes a computer monitor 72 mounted to the support bar 66 of the articulating arm assembly 60 by a bracket 74 and one rotation pin 68 to allow the computer monitor 72 to be rotated. In yet another embodiment, the ATD test equipment includes a computer 76 mounted to the support bar 66 of the articulating arm assembly 60 via the bracket 74 and one rotation pin 68 to allow the computer 76 to be rotated. It should be appreciated that, in one embodiment, one articulating arm assembly 60 is attached to one column member 38 that supports the DPS cameras 70 and another articulating arm assembly 60 is attached to another column member 38 that supports either the computer monitor 72 and/or the computer 74. It should be appreciated that the DPS is directly mounted to the test fixture 28 and the articulating arm assemblies 60 are used to move the DPS cameras 70 and computer monitor 72 and/or computer 74 into position and out of the way for the crash test. It should also be appreciated that the computer 74 and/or computer monitor 72 can also be mounted to the test fixture 28 and the computer 74 can be used not only for the DPS, but also for data acquisition and analysis. It should further be appreciated that all four components allow a full test and analysis to be performed on one device. It should still further be appreciated that consolidating all the parts of the crash test into one device increases the efficiency and accuracy of testing of the ATD or crash test dummy 12.

In one embodiment, the clamp assembly 64 includes a pair of mounting plates 78 disposed on opposed sides of the column member 38. The clamp assembly 64 includes one or more fasteners 80 extending through the mounting plates 78 to rigidly attach the articulating arm assembly 60 to the column member 38. One of the mounting plates 78 includes a journal or bracket 82 for the rotation pin 68 to allow the support bar 66 to rotate relative to the mounting plate 78. It should be appreciated that the clamp assembly 64 rigidly attaches the swivel arm 62 to the impact stand 28. It should be appreciated that the clamp assemblies 64 may be adjustable up and down along the column members 38.

In operation of the articulating dummy positioning system 10, the crash test dummy 12 is secured to the impact table 26 in the impact stand 28. The articulating arm assemblies 60 can be moved in and out of the test stand 28 to position the DPS cameras 70 and computer 74 and/or computer monitor 72 relative to the crash test dummy 12 and moved out of the way for the crash test.

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

## Claims

1. An articulating dummy positioning system (10) for a crash test dummy (12) comprising:
a test fixture (28) configured to support a crash test dummy (12) therein;
at least one articulating arm assembly (60) coupled to said test fixture (28); and
at least one of at least one dummy positioning camera (70), computer monitor (72), and computer (74) operatively coupled to said at least one articulating arm assembly (60) to allow said at least one of at least one dummy positioning camera (70), computer monitor (72), and computer (74) to move in and out of said test fixture (28) relative to the crash test dummy (12) to allow a crash test and analysis to be performed on the crash test dummy (12).

2. An articulating dummy positioning system (10) as set forth in claim 1 wherein said at least one articulating arm assembly (60) includes a swivel arm (62) and a clamp assembly (64) to fixedly secure said swivel arm (62) to said text fixture (28).

3. An articulating dummy positioning system (10) as set forth in claim 2 wherein said swivel arm (62) includes a plurality of support bars (66).

4. An articulating dummy positioning system (10) as set forth in claim 3 wherein said swivel arm (62) includes at least one rotation pin (68) disposed between said support bars (66) to allow said support bars (66) to rotate relative to each other.

5. An articulating dummy positioning system (10) as set forth in claim 4 wherein said swivel arm (62) includes an additional rotation pin (68) disposed between one of said support bars (66) and said clamp assembly (64).

6. An articulating dummy positioning system (10) as set forth in any one of claims 3-5 wherein said swivel arm (62) includes a bracket (82) attached to one of said computer monitor (72) and said computer (74) and a rotation pin (68) interconnecting said bracket (82) and one of said support bars (66).

7. An articulating dummy positioning system (10) as set forth in any one of claims 2-6 wherein said test fixture (28) includes a plurality of column members (38).

8. An articulating dummy positioning system (10) as set forth in claim 7 wherein said clamp assembly (64) includes a plurality of mounting plates (78) disposed on opposed sides of one of said column members (38).

9. An articulating dummy positioning system (10) as set forth in claim 8 wherein said clamp assembly (64) includes a plurality of fasteners (80) extending through said mounting plates (78).

10. An articulating dummy positioning system (10) as set forth in any one of claims 1-9 including an impact table (26) disposed in said test fixture (28) and configured to support the crash test dummy (12).
